# DEMANDE DE BREVET EUROPEEN

(11) **EP 4 389 369 A1**
(43) Date de publication de la demande: **26.06.2024**
(21) Numéro de dépôt: 23216041.6
(22) Date de dépôt: 12.12.2023
(51) Int. Cl.: B25J 15/00, B25J 15/06

(54) **UNITÉ DE PRÉHENSION MODULAIRE DÉFORMABLE**

(30) Priorité: 21.12.2022 FR 2214045
(71) Demandeur: Commissariat à l'énergie atomique et aux énergies alternatives, 75015 Paris (FR)
(72) Inventeur: NANTERMOZ, Coline, 91191 Gif-sur-Yvette Cedex (FR); PERROT, Yann, 91191 Gif-sur-Yvette Cedex (FR); PEROCHON, Benoît, 91191 Gif-sur-Yvette Cedex (FR)
(74) Mandataire: Brevalex

(57) **Abrégé**

Unité de préhension (1) comprenant :
- un premier préhenseur (10, 110) , un deuxième préhenseur (20, 120) et un troisième préhenseur (30, 130);
- une première biellette (40, 60) reliant le premier préhenseur (10, 110) et le deuxième préhenseur (20, 120) et qui s'étend selon une première direction (D1);
- une deuxième biellette (50, 70) reliant le deuxième préhenseur (20, 120) et le troisième préhenseur (30, 130) et qui s'étend selon une deuxième direction (D2); dans laquelle,
la première biellette (40, 60) est agencée pour autoriser une première rotation du premier préhenseur (10, 110) relativement au deuxième préhenseur (20, 120) autour d'un premier axe de rotation (O10, O110), et
la deuxième biellette (50, 70) est agencée pour autoriser une deuxième rotation du troisième préhenseur (30, 130) relativement au deuxième préhenseur (20, 120) autour d'un deuxième axe de rotation (020, 0120).

## Description

### DOMAINE TECHNIQUE

L'invention se rapporte au domaine de la manutention et plus particulièrement au domaine des unités de préhension à plusieurs préhenseurs.

### ÉTAT DE LA TECHNIQUE ANTÉRIEURE

Il est connu des unités de préhension pourvues de plusieurs préhenseurs qui constituent autant de point de liaison commandables avec une pièce à manipuler et qui sont positionnés de manière à définir une géométrie optimale des points de liaison à ladite pièce. Les préhenseurs sont solidaires d'un châssis et sont commandés individuellement ou par groupe pour saisir une pièce définie. Ces unités de préhension sont très adaptées à la manipulation dans des process dévolus à des grandes séries. Ils demeurent inadaptés à la manipulation de pièces variées et/ou les productions en petites séries car les changements de formes des pièces à manipuler imposent d'adapter la position relative des préhenseurs. Une solution consiste à fixer les préhenseurs sur des supports coulissants les uns relativement aux autres (généralement des rails) et de reconfigurer les positions relatives des préhenseurs sur les supports et des supports entre eux. Le temps de reconfiguration de l'unité de préhension pour l'adapter à une nouvelle géométrie de pièce à manipuler est long et coûteux et requiert généralement d'également reconfigurer l'alimentation des préhenseurs en énergie (électrique ou pneumatique). Ainsi, de telles solutions sont adaptées pour les moyennes séries mais n'offrent pas de solution satisfaisantes pour des petites séries.

### BUT DE L'INVENTION

L'invention a pour but de réduire les temps et coûts de reconfiguration d'une unité de préhension pour le passage d'une géométrie de pièce à saisir à une autre.

### EXPOSÉ DE L'INVENTION

A cet effet, on prévoit une unité de préhension comprenant un premier préhenseur, un deuxième préhenseur et un troisième préhenseur. Une première biellette relie le premier préhenseur et le deuxième préhenseur et s'étend selon une première direction. Une deuxième biellette relie le deuxième préhenseur et le troisième préhenseur et s'étend selon une deuxième direction. Selon l'invention, la première biellette est agencée pour autoriser une première rotation du premier préhenseur relativement au deuxième préhenseur autour d'un premier axe de rotation, et la deuxième biellette est agencée pour autoriser une deuxième rotation du troisième préhenseur relativement au deuxième préhenseur autour d'un deuxième axe de rotation.

On obtient ainsi un préhenseur qui peut aisément et rapidement être adapté à diverses configurations de pièces à saisir sans requérir d'outillage spécifique ou de dépose de l'unité de préhension.

Selon d'autres modes de réalisation particuliers, non exclusifs et optionnels de l'invention :
- le premier axe de rotation et le deuxième axe de rotation sont confondus ;
- le premier axe de rotation est sensiblement orthogonal à la première direction et/ou le deuxième axe de rotation est sensiblement orthogonal à la deuxième direction ;
- le premier axe de rotation est sensiblement parallèle à la première direction et/ou le deuxième axe de rotation est sensiblement parallèle à la deuxième direction ;
- la deuxième biellette est également agencée pour autoriser une troisième rotation du troisième préhenseur relativement au deuxième préhenseur autour d'un troisième axe de rotation distinct du deuxième axe de rotation ;
- le troisième axe de rotation est orthogonal au deuxième axe de rotation ;
- le premier préhenseur et/ou le deuxième préhenseur et/ou le troisième préhenseur comprend une ventouse de préhension par le vide ;
- la première biellette et/ou la deuxième biellette comprennent un canal de liaison fluidique destiné à être raccordé à un générateur de vide ;
- l'unité de préhension comprend des moyens de blocage en position de la première biellette relativement à la deuxième biellette ;
- les moyens de blocage comprennent un élément de transmission d'un effort de traction qui coopère avec la première biellette et la deuxième biellette pour appliquer un effort d'appui de la première biellette sur la deuxième biellette lors de l'application d'un effort de traction sur au moins une extrémité de l'élément de transmission d'un effort de traction ;
- au moins un préhenseur parmi le premier préhenseur, le deuxième préhenseur et le troisième préhenseur comprend un corps s'étendant selon une direction longitudinale et la première biellette ou la deuxième biellette comprend un alésage d'accueil d'une portion cylindrique droite du au moins un préhenseur, ladite portion étant délimitée par un méplat destiné à recevoir un effort de serrage de ladite biellette selon la direction longitudinale ;
- le au moins un préhenseur comprend une portion filetée d'accueil d'un écrou de serrage.

D'autres caractéristiques et avantages de l'invention apparaîtront à la lecture de la description qui suit d'un mode de réalisation particulier non limitatif de l'invention.

### BRÈVE DESCRIPTION DES DESSINS

[Fig. 1] la figure 1 est une représentation schématique en perspective et écorché partiel d'une unité de préhension selon un premier mode de réalisation de l'invention dans une première configuration;
[Fig. 2] la figure 2 est une représentation schématique en coupe d'un premier préhenseur de l'unité de préhension de la figure 1;

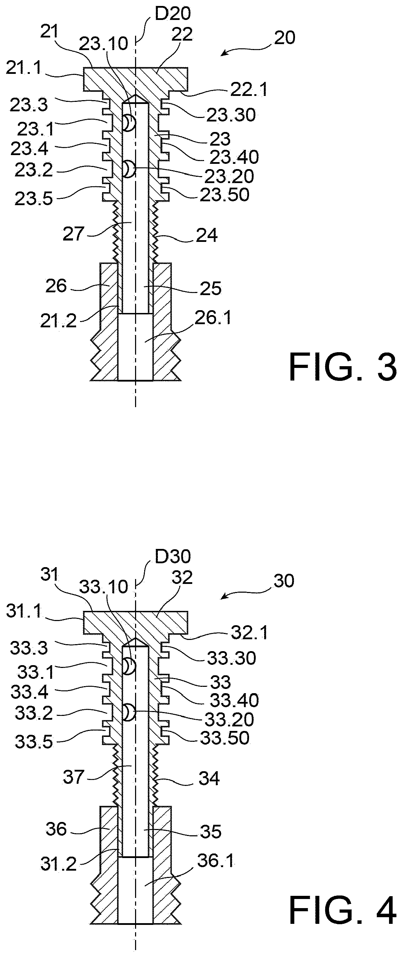

[Fig. 3] la figure 3 est une représentation schématique en coupe d'un deuxième préhenseur de l'unité de préhension de la figure 1;
[Fig. 4] la figure 4 est une représentation schématique en coupe d'un troisième préhenseur de l'unité de préhension de la figure 1;
[Fig. 5] la figure 5 est une représentation schématique d'une première biellette de l'unité de préhension de la figure 1;
[Fig. 6] la figure 6 est une représentation schématique en coupe longitudinale de la biellette de la figure 5;
[Fig. 7] la figure 7 est une représentation schématique d'une deuxième biellette de l'unité de préhension de la figure 1;
[Fig. 8] la figure 8 est une représentation schématique en coupe longitudinale de la biellette de la figure 7;
[Fig. 9] la figure 9 est une représentation schématique d'une bague d'alimentation de l'unité de préhension de la figure 1;
[Fig. 10] la figure 10 est une représentation schématique en coupe longitudinale de la bague de la figure 9;
[Fig. 11] la figure 11 est une représentation schématique d'une bague terminale de l'unité de préhension de la figure 1;
[Fig. 12] la figure 12 est une représentation schématique en coupe de l'unité de préhension de la figure 1 dans une deuxième configuration;
[Fig. 13] la figure 13 est une représentation schématique en perspective d'une unité de préhension selon un deuxième mode de réalisation de l'invention;
[Fig. 14] la figure 14 est une représentation schématique en coupe d'un premier préhenseur de l'unité de préhension de la figure 13;
[Fig. 15] la figure 15 est une représentation schématique en coupe d'un deuxième préhenseur de l'unité de préhension de la figure 13;
[Fig. 16] la figure 16 est une représentation schématique en coupe d'un troisième préhenseur de l'unité de préhension de la figure 13;
[Fig. 17] la figure 17 est une représentation schématique en coupe longitudinale d'une première biellette de l'unité de préhension de la figure 13;
[Fig. 18] la figure 18 est une représentation schématique en coupe d'une deuxième biellette de l'unité de préhension de la figure 13;
[Fig. 19] la figure 19 est une représentation schématique d'un téton terminal de l'unité de préhension de la figure 13;
[Fig. 20] la figure 20 est une représentation schématique partielle en coupe d'une unité de préhension selon un troisième mode de réalisation de l'invention.

### EXPOSÉ DÉTAILLÉ DE MODES DE RÉALISATION PARTICULIERS

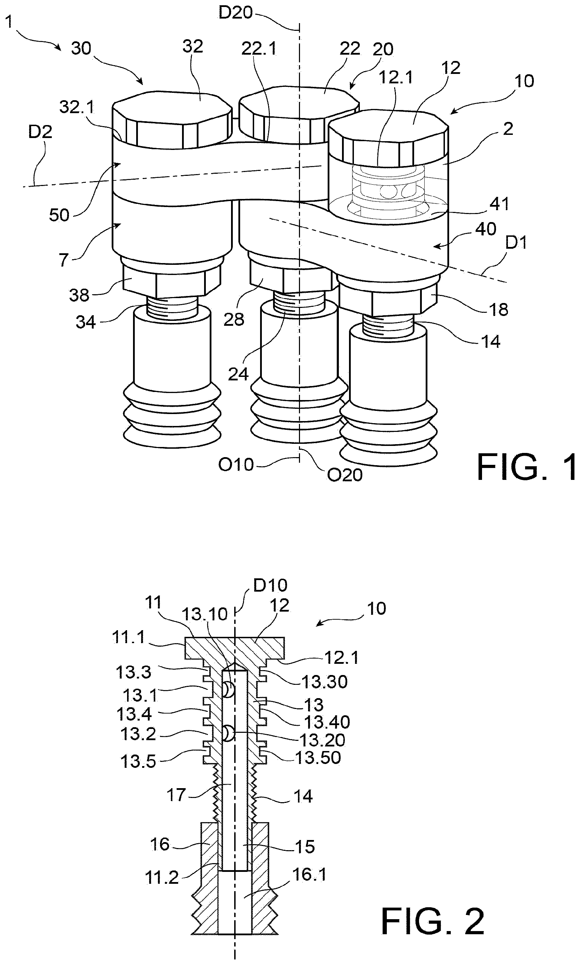

En référence à la figure 1, l'unité de préhension, généralement désignée 1, comprend un premier préhenseur 10 par vide à ventouse, un deuxième préhenseur 20 par vide à ventouse et un troisième préhenseur 30 par vide à ventouse.

Une première biellette 40 s'étend selon une première direction D1 pour relier le préhenseur 10 et le préhenseur 20. Une deuxième biellette 50 s'étend selon une deuxième direction D2 pour relier le préhenseur 20 et le préhenseur 30.

Les préhenseurs 10, 20 et 30 sont, selon ce premier mode de réalisation, tous identiques et seul le préhenseur 10 va être décrit en détail.

En référence à la figure 2, le préhenseur 10 comprend un premier corps 11 s'étendant selon une première direction longitudinale D10. Le corps 11 comprend, en sa première extrémité proximale 11.1, une première tête 12 de type TH de laquelle s'étend une première portion cylindrique droite 13. La face inférieure de la tête 12 définit un premier méplat 12.1 qui délimite la portion 13. Une première portion filetée 14 relie la portion 13 et un premier embout 15 situé en la première extrémité distale 11.2 du corps 11. L'embout 15 est lisse et reçoit une première ventouse 16 de préhension par le vide. Le corps 11 comprend un premier perçage interne borgne 17 axial qui s'étend selon la direction D10 et débouche en l'extrémité distale 11.2 dans une première enceinte interne 16.1 de la ventouse 16.

La portion 13 comprend une première gorge circonférentielle 13.1 haute en communication fluidique avec le perçage 17 via un premier canal 13.10 radial haut et une première gorge circonférentielle 13.2 basse en communication fluidique avec le perçage 17 via un premier canal 13.20 radial bas. La portion 13 comprend également trois premières gorges circonférentielles haute 13.3, médiane 13.4 et basse 13.5 d'accueil respectivement d'un premier joint 13.30 torique d'étanchéité haute, d'un deuxième joint 13.40 torique d'étanchéité médiane et d'un premier joint 13.50 torique d'étanchéité basse. Identiquement, le préhenseur 20 comprend un deuxième corps 21 s'étendant selon une deuxième direction longitudinale D20 qui comprend, en sa deuxième extrémité proximale 21.1, une deuxième tête 22 qui définit un deuxième méplat 22.1. Une deuxième portion filetée 24 relie la deuxième portion 23 cylindrique droite et un deuxième embout 25 situé en la deuxième extrémité distale 21.2 du corps 21. L'embout 25 est lisse et reçoit une deuxième ventouse 26 dont la deuxième enceinte interne 26.1 est reliée fluidiquement au deuxième perçage interne 27. La portion 23 comprend deux deuxièmes gorges haute 23.1 et basse 23.2 en communication fluidique avec le perçage 27 via des deuxièmes canaux haut 23.10 et bas 23.20 ainsi que trois deuxièmes gorges 23.3, 23.4 et 23.5 d'accueil de joints toriques 23.30, 23.40 et 23.50.

Identiquement, le préhenseur 30 comprend un troisième corps 31 s'étendant selon une troisième direction longitudinale D30 qui comprend, en sa troisième extrémité proximale 31.1, une troisième tête 32 qui définit un troisième méplat 32.1. Une troisième portion filetée 34 relie la troisième portion 33 cylindrique droite et un troisième embout 35 situé en la troisième extrémité distale 31.2 du corps 31. L'embout 35 est lisse et reçoit une troisième ventouse 36 dont la troisième enceinte interne 36.1 est reliée fluidiquement au troisième perçage interne 37. La portion 33 comprend deux troisièmes gorges haute 33.1 et basse 33.2 en communication fluidique avec le perçage 37 via des troisièmes canaux haut 33.10 et bas 33.20 ainsi que trois troisièmes gorges haute 33.3, médiane 33.4 et basse 33.5 d'accueil des joints toriques 33.30, 33.40 et 33.50.

Les biellettes 40 et 50 sont, selon ce premier mode de réalisation, toutes identiques et seule la biellette 40 va être décrite en détails.

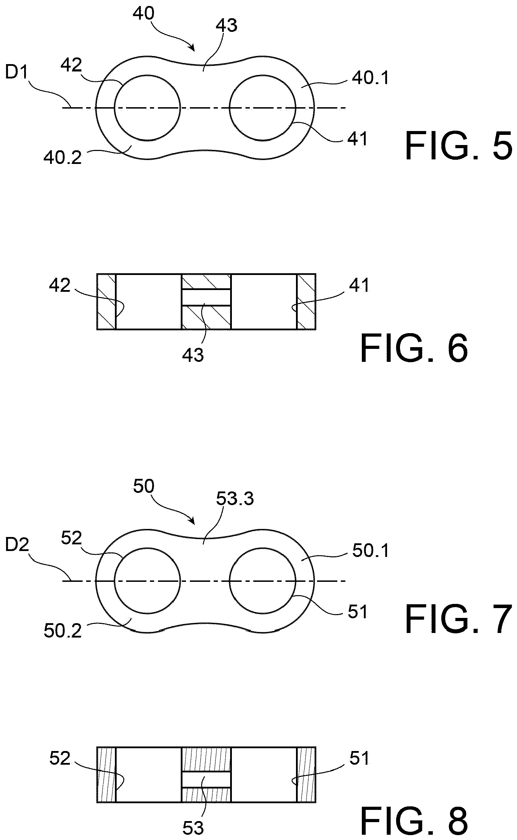

En référence aux figures 5 et 6, la biellette 40 comprend une première portion 40.1 et une deuxième portion 40.2 en forme de cylindre droit et qui sont reliées par une portion centrale 40.3 qui est tangente aux portions 40.1 et 40.2. La portion 40.1 comprend un premier alésage 41 et la portion 40.2 comprend un deuxième alésage 42. Un deuxième canal 43 relie fluidiquement les alésages 41 et 42. Le premier alésage 41 correspond à un premier point de terminaison de la biellette 40. Le deuxième alésage 42 correspond à un deuxième point de terminaison de la biellette 40.

Identiquement, la biellette 50 comprend une troisième portion 50.1 pourvue d'un troisième alésage 51 et une quatrième portion 50.2 pourvue d'un quatrième alésage 52. Un troisième canal 53 relie fluidiquement les alésages 51 et 52 (figures 7 et 8). Le troisième alésage 51 correspond à un premier point de terminaison de la biellette 50. Le quatrième alésage 52 correspond à un deuxième point de terminaison de la biellette 50.

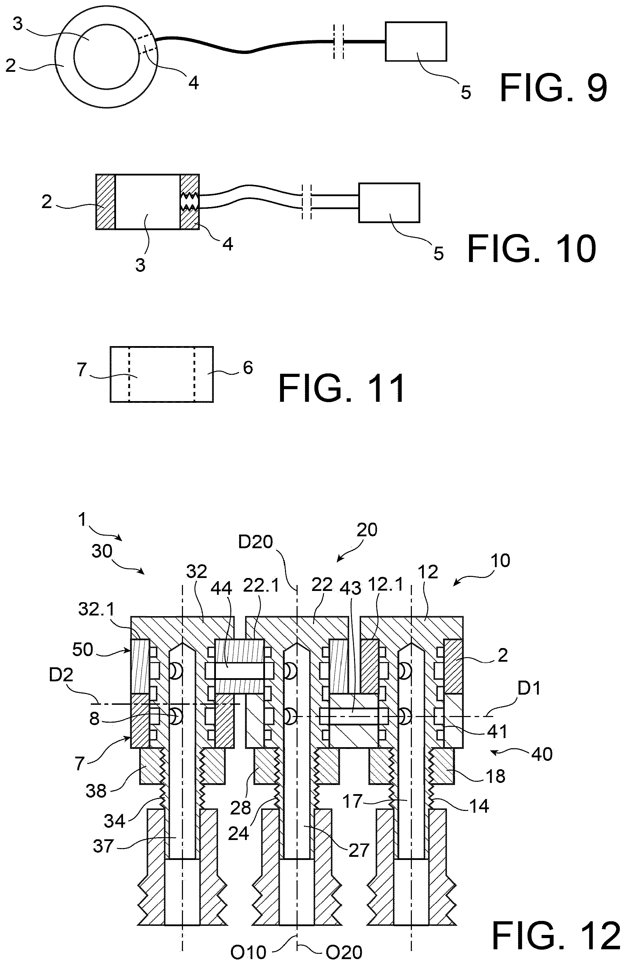

L'unité 1 comprend également une bague d'alimentation 2 cylindrique droite qui comprend un alésage central d'alimentation 3 relié par un quatrième canal radial 4 à un générateur de vide 5 (figures 9 et 10).

L'unité 1 comprend également une bague terminale 6 cylindrique droite qui comprend un alésage central terminal 7 (figure 11).

En référence aux figures 1 et 2, l'unité 1 est obtenue en montant la bague 2 et l'alésage 41 de la biellette 40 sur le préhenseur 10 de manière à ce que le canal 4 soit en communication fluidique avec la gorge 13.1 et de manière à ce que le canal 43 soit en communication fluidique avec la gorge 13.2. Les joints 13.30, 13.40 et 13.50 assurent l'étanchéité des liaisons fluidiques du canal 4 avec la gorge 13.1 et du canal 43 avec la gorge 13.2. Un écrou 18 est engagé et serré sur la portion filetée 14. L'écrou 18 exerce un effort de serrage selon la direction D10 de la portion 40.1 entre l'écrou 18 et le méplat 12.1 via la bague 2.

Le préhenseur 10 correspond à un préhenseur proximal de la biellette 40 et le préhenseur 20 correspond à un préhenseur distal de la biellette 40.

La biellette 50 est ensuite placée au contact de la biellette 40 de manière à ce que les alésages 42 et 51 soient alignés. Le préhenseur 20 est engagé au travers des alésages 42 et 51 de manière à ce que le canal 53 soit en communication fluidique avec la gorge 23.1 et de manière à ce que le canal 43 soit en communication fluidique avec la gorge 23.2. Les joints 23.30, 23.40 et 23.50 assurent l'étanchéité des liaisons fluidiques du canal 53 avec la gorge 23.1 et du canal 43 avec la gorge 23.2. Un écrou 28 est engagé et serré sur la portion filetée 24. L'écrou 28 exerce un effort de serrage selon la direction D20 de la portion 40.2 entre l'écrou 28 et le méplat 22.1 via la portion 50.1.

Le préhenseur 20 correspond à un préhenseur proximal de la biellette 50 et le préhenseur 30 correspond à un préhenseur distal de la biellette 50.

La bague 6 est ensuite placée au contact de la biellette 50 de manière à ce que les alésages 7 et 52 soient alignés. Le préhenseur 30 est engagé au travers des alésages 7 et 52 de manière à ce que le canal 53 soit en communication fluidique avec la gorge 33.1 et de manière à ce que la gorge 33.2 soit obturée par la bague 6. Les joints 33.30, 33.40 et 33.50 assurent l'étanchéité des liaisons fluidiques du canal 53 avec la gorge 33.1 et l'obturation de la gorge 33.2. Un écrou 38 est engagé et serré sur la portion filetée 34. L'écrou 38 exerce un effort de serrage selon la direction D30 de la bague 6 entre l'écrou 38 et le méplat 32.1 via la portion 50.2.

Le serrage de l'écrou 28 et les ajustements des alésages 42 et 51 autorisent une première rotation du préhenseur 10 relativement au préhenseur 20 autour d'un premier axe de rotation O10 confondu avec la direction D20 ainsi qu'une deuxième rotation du préhenseur 30 relativement au préhenseur 20 autour d'un deuxième axe de rotation O20 confondu avec la direction D20. Selon ce premier mode de réalisation, le premier axe de rotation O10 et le deuxième axe de rotation O20 sont confondus et le premier axe de rotation O10 est sensiblement orthogonal à la direction D1 et le deuxième axe de rotation O20 est sensiblement orthogonal à la direction D2.

Les bagues 2 et 6 ainsi que les canaux 43 et 53 et leurs liaisons avec les gorges 13.1, 13.2, 23.1, 23.2, 33.1 et 33.2 réalisent un circuit pneumatique 8 d'alimentation des préhenseurs 10, 20 et 30 en vide relié par le canal 4 au générateur 5.

On obtient ainsi une unité 1 sous la forme d'une « chaîne » dont les maillons sont constitués par les biellettes 40 et 50 articulées sur les préhenseurs 10, 20 et 30 et qui comprend un premier maillon sous la forme d'une biellette 40 qui relie un préhenseur proximal 10 et un préhenseur distal 20, et un deuxième maillon sous la forme d'une biellette 50 qui relie un préhenseur proximal 20 et un préhenseur distal 30.

En fonctionnement, une première configuration de l'unité 1 correspondant à une première position relative des préhenseurs 10, 20 et 30 est définie par action manuelle d'un opérateur sur les préhenseurs 10, 20 et 30. Ici, la première configuration est une configuration d'alignement des préhenseurs 10, 20 et 30 représentée en figure 12. Les jeux de montage des alésages 42 et 51 sur la portion 13 ainsi que le serrage de l'écrou 28 et les frottements des joints 23.20, 23.30 et 23.40 sur les alésages 42 et 51 permettent un déplacement manuel des préhenseurs 10, 20 et 30 relativement l'un à l'autre ainsi qu'un maintien en position lors des opérations de préhension. Ainsi, les écrous 18, 28 et 38 constituent des moyens de blocage en position de la biellette 40 relativement à la biellette 50.

L'unité 1 est alors, dans cette première configuration, en mesure d'effectuer la préhension et la relâche sélective d'objets longilignes en commandant le générateur de vide 5.

Lorsque l'on souhaite que l'unité 1 puisse réaliser la préhension de pièces de forme différente, une forme à section circulaire par exemple, l'opérateur manipule le préhenseur 10 de manière à lui appliquer un mouvement de rotation autour de l'axe O20 relativement au préhenseur 20. L'opérateur procède de même avec le préhenseur 30 et manipule celui-ci de manière à lui appliquer un mouvement de rotation autour de l'axe O20 relativement au préhenseur 20 et obtenir une deuxième configuration de l'unité 1 dans laquelle les préhenseurs 10, 20 et 30 constituent les sommets d'un triangle isocèle, représentée en figure 1.

L'unité 1 est alors, dans cette deuxième configuration, en mesure d'effectuer la préhension et la relâche sélective d'objets de forme à section circulaire en commandant le générateur de vide 5.

Selon ce premier mode de réalisation, l'unité de préhension 1 comprend un nombre Np de préhenseurs 10, 20, 30 égal à trois et un nombre Nb de biellettes deux préhenseurs 40, 50 égal à : Np-1= 2.

Les éléments identiques ou analogues à ceux précédemment décrits porteront une référence numérique identique à celle-ci dans la description qui suit d'un deuxième, mode de réalisation de l'invention.

Selon un deuxième mode de réalisation représenté en figure 13, une troisième biellette 60 s'étend selon la direction D1 pour relier un quatrième préhenseur 110 et un cinquième préhenseur 120 et une quatrième biellette 70 s'étend selon la direction D2 pour relier le préhenseur 120 et un sixième préhenseur 130.

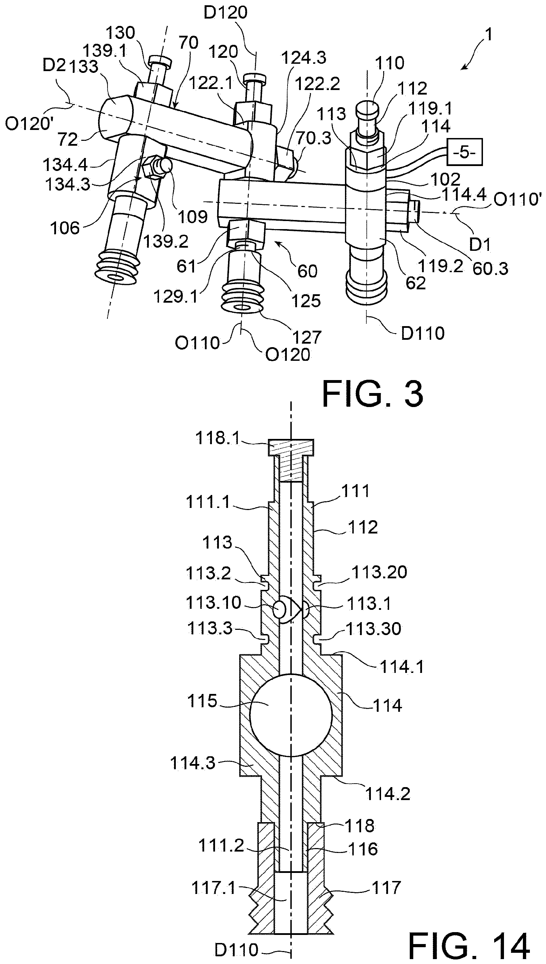

En référence à la figure 14, le préhenseur 110 comprend un quatrième corps 111 s'étendant selon une quatrième direction longitudinale D110. Le corps 111 comprend une cinquième portion filetée 112 qui s'étend entre la quatrième extrémité proximale 111.1 du corps 111 et une cinquième portion cylindrique droite 113. La portion 113 relie la portion filetée 112 à une face supérieure 114.1 d'un quatrième bloc sensiblement parallélépipédique 114 du corps 111. Un cinquième alésage 115 s'étend entre deux quatrièmes faces 114.3 et 114.4 du bloc 114 selon une direction sensiblement orthogonale à la direction D110. Les faces 114.3 et 114.4 définissent des quatrièmes méplats du préhenseur 110. Un quatrième embout 116 s'étend depuis une face inférieure 114.2 du bloc 114 opposée à la face 114.1 jusqu'à la quatrième extrémité distale 111.2 du corps 111. L'embout 116 est lisse et reçoit une quatrième ventouse 117 de préhension par le vide. Le corps 111 comprend un quatrième perçage interne traversant 118 axial qui s'étend selon la direction D110 et débouche en l'extrémité distale 111.2 du corps 111 dans une quatrième enceinte interne 117.1 de la ventouse 117. Un premier capuchon 118.1 vient obturer l'extrémité du perçage 118 située en l'extrémité proximale 111.1 du corps 111. Un cinquième canal radial 113.10 relie le perçage 118 avec une surface extérieure 113.1 de la portion 113. La portion 113 comprend également une quatrième gorge circonférentielle haute 113.2 et une quatrième gorge circonférentielle basse 113.3 d'accueil respectivement d'un quatrième joint 113.20 torique d'étanchéité haute et d'un quatrième joint 113.30 torique d'étanchéité basse.

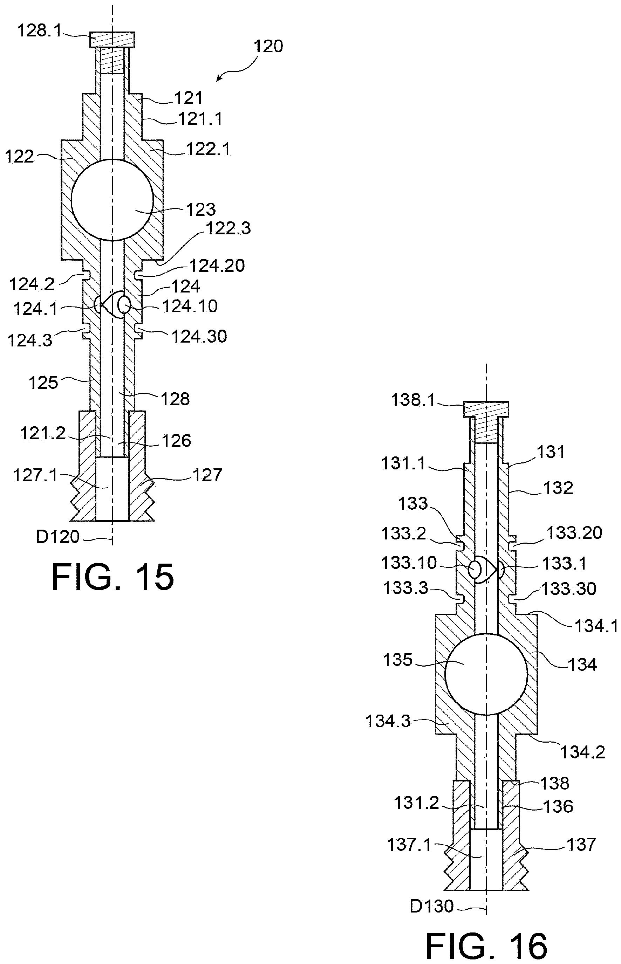

En référence à la figure 15, le préhenseur 120 comprend un cinquième corps 121 s'étendant selon une cinquième direction longitudinale D120 et qui comprend un cinquième bloc 122 au travers duquel un sixième alésage 113 s'étend entre deux cinquièmes faces 122.1 et 122.2 du bloc 122 selon une direction sensiblement orthogonale à la direction D120. Les faces 112.1 et 112.2 définissent des cinquièmes méplats du préhenseur 120.

Le préhenseur 120 comprend une sixième portion cylindrique 124 qui s'étend depuis une cinquième face inférieure 122.3 du bloc 122 pour relier le bloc 122 à une sixième portion filetée 125 en l'extrémité de laquelle se trouve un cinquième embout 126 situé en la cinquième extrémité distale 121.2 du corps 121. L'embout 126 est lisse et reçoit une cinquième ventouse 127 de préhension par le vide. Le corps 121 comprend un cinquième perçage interne traversant 128 axial qui s'étend selon la direction D120 et débouche en l'extrémité distale 121.2 du corps 121 dans une cinquième enceinte interne 127.1 de la ventouse 127. Un deuxième capuchon 128.1 vient obturer l'extrémité du perçage 128 située en l'extrémité proximale 121.1 du corps 121.

Un sixième canal radial 124.10 relie le perçage 128 avec une surface extérieure 124.1 de la portion 124. La portion 124 comprend également une cinquième gorge circonférentielle haute 124.2 et basse 124.3 d'accueil respectivement d'un quatrième joint 124.20 torique d'étanchéité haute et d'un quatrième joint 124.30 torique d'étanchéité basse.

Le préhenseur 130 est similaire au préhenseur 110 et comprend un sixième corps 131 s'étendant selon une sixième direction longitudinale D130. Le corps 131 comprend une septième portion filetée 132 qui s'étend entre la sixième extrémité proximale 131.1 du corps 131 et une septième portion cylindrique droite 133. La portion 133 relie la portion filetée 132 à une face supérieure 134.1 d'un sixième bloc sensiblement parallélépipédique 134 du corps 131. Un septième alésage 135 s'étend entre deux sixièmes faces 134.3 et 134.4 du bloc 134 selon une direction sensiblement orthogonale à la direction D130. Les faces 134.3 et 134.4 définissent des sixièmes méplats du préhenseur 130. Un sixième embout 136 s'étend depuis une face inférieure 134.2 du bloc 134 opposée à la face 134.1 jusqu'à la quatrième extrémité distale 131.2 du corps 131. L'embout 136 est lisse et reçoit une sixième ventouse 137 de préhension par le vide. Le corps 131 comprend un sixième perçage interne traversant 138 axial qui s'étend selon la direction D130 et débouche en l'extrémité distale 131.2 du corps 131 dans une quatrième enceinte interne 137.1 de la ventouse 137. Un premier capuchon 138.1 vient obturer l'extrémité du perçage 138 située en l'extrémité proximale 131.1 du corps 131.

Un septième canal radial 133.10 relie le perçage 138 avec une surface extérieure 133.1 de la portion 133. La portion 133 comprend également une sixième gorge circonférentielle haute 133.2 et une sixième gorge circonférentielle basse 133.3 d'accueil respectivement d'un sixième joint 133.20 torique d'étanchéité haute et d'un sixième joint 133.30 torique d'étanchéité basse.

Les biellettes 60 et 70 sont, selon ce deuxième mode de réalisation, toutes identiques et seule la biellette 60 va être décrite en détails.

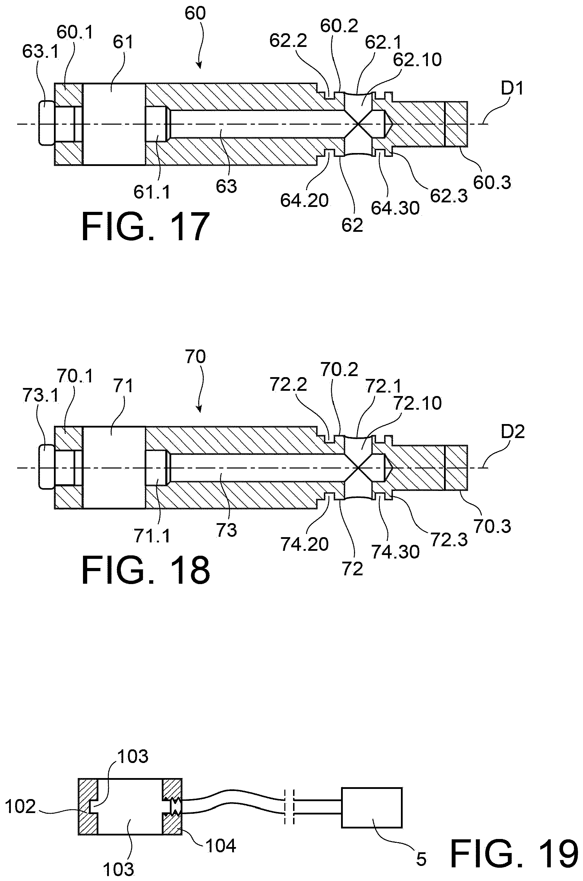

En référence aux figures 17 et 18, la biellette 60 est de forme parallélépipédique et comprend une huitième portion 60.1 et une neuvième portion 60.2. La portion 60.1 comprend un septième alésage 61 et la portion 60.2 comprend une onzième portion cylindrique droite 62 terminée par un septième embout fileté 60.3. Un huitième canal 63 s'étend dans le corps de la biellette 60 selon la direction D1 et débouche dans une septième gorge circonférentielle 61.1 de l'alésage 61. Un septième canal radial 62.10 relie le canal 63 à une septième gorge circonférentielle 62.1 de la portion 62. La portion 62 comprend également une huitième gorge circonférentielle proximale 62.2 et une huitième gorge circonférentielle distale 62.3 d'accueil respectivement d'un septième joint 64.20 torique d'étanchéité proximale et d'un septième joint 64.30 torique d'étanchéité distale. Comme visible en figure 17, le canal 63 débouche en l'extrémité de la portion 60.1 de la biellette 70 et reçoit un quatrième capuchon 63.1 d'obturation.

Le septième alésage 61 correspond à un premier point de terminaison de la biellette 60. La onzième portion 62 correspond à un deuxième point de terminaison de la biellette 60.

Identiquement, la biellette 70 comprend une douzième portion 70.1 pourvue d'un huitième alésage 71 et une treizième portion 70.2 pourvue d'une quatorzième portion cylindrique droite 72 terminée par un huitième embout fileté 70.3. Un neuvième canal 73 s'étend dans le corps de la biellette 70 selon la direction D2 et débouche dans une huitième gorge circonférentielle 71.1 de l'alésage 71 . Un huitième canal radial 72.10 relie le canal 73 à une neuvième gorge circonférentielle 72.1 de la portion 72. La portion 72 comprend également une dixième gorge circonférentielle proximale 72.2 et une dixième gorge circonférentielle distale 72.3 d'accueil respectivement d'un huitième joint 74.20 torique d'étanchéité proximale et d'un huitième joint 74.30 torique d'étanchéité distale.

Comme visible en figure 18, le canal 73 débouche en l'extrémité de la portion 70.1 de la biellette 70 et reçoit un cinquième capuchon 73.1 d'obturation.

Le huitième alésage 71 correspond à un premier point de terminaison de la biellette 70. La quatorzième portion 72 correspond à un deuxième point de terminaison de la biellette 70.

L'unité 1 comprend également une bague d'alimentation 102 cylindrique droite qui comprend un alésage central d'alimentation 103 et une gorge circonférentielle d'alimentation 103.1 reliée par un neuvième canal radial 104 à un générateur de vide 5 (figure 19).

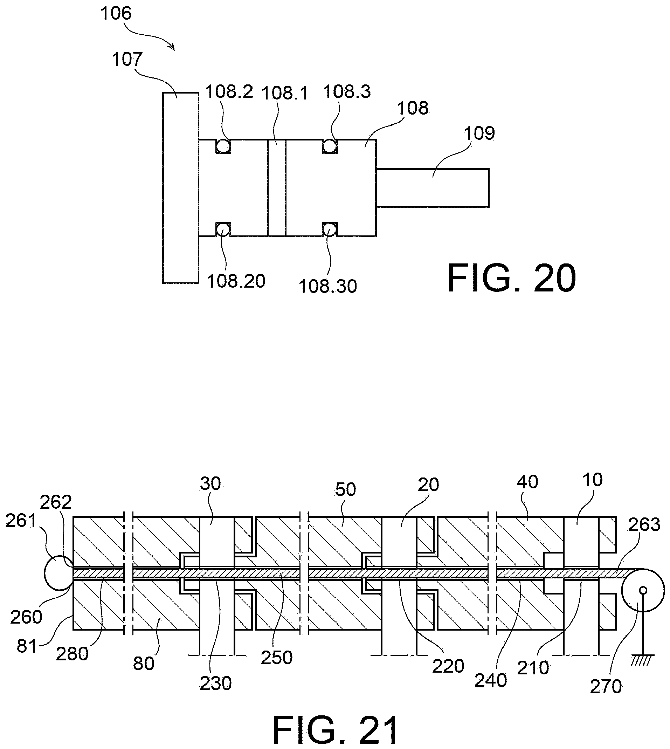

L'unité 1 comprend également un téton terminal 106 cylindrique droit qui comprend une portion d'appui 107, une portion médiane 108 et une huitième portion filetée 109 (fig.20). La portion 108 comprend un canal diamétral 108.1 ainsi qu'une onzième gorge circonférentielle proximale 108.2 et une onzième gorge circonférentielle distale 108.3 d'accueil respectivement d'un neuvième joint 108.20 torique d'étanchéité proximale et d'un huitième joint 108.30 torique d'étanchéité distale.

En référence à la figure 21, l'unité 1 est obtenue en montant la bague 102 sur la portion 113 du préhenseur 110 et en serrant celle-ci contre la face 114.1 à l'aide d'un écrou 119.1 engagé sur la portion 112. La portion 62 de la biellette 60 est ensuite engagée dans l'alésage 115 du préhenseur 110 de manière à ce que le perçage 118 du préhenseur 110 soit en communication fluidique avec la gorge 62.1 de la biellette 60. Les joints 62.20 et 62.30 assurent l'étanchéité de la liaison fluidique du perçage 118 avec la gorge 62.1. Les joints 113.20 et 113.30 assurent l'étanchéité de la liaison fluidique du perçage 118 via le canal 113.10 avec le canal 104 et le générateur de vide 5. Un écrou 119.2 est engagé et serré sur l'embout fileté 60.3 pour maintenir le préhenseur 110 sur la biellette 60.

La portion 124 du préhenseur 120 est ensuite engagée dans l'alésage 61 de la biellette 60 de manière à ce que le perçage 128 du préhenseur 120 soit en communication fluidique avec la gorge 61.1 de la biellette 60. Les joints 124.20 et 124.30 assurent l'étanchéité de la liaison fluidique du perçage 128 avec la gorge 61.1. Un écrou 129.1 est engagé et serré sur la portion filetée 125 pour maintenir le préhenseur 110 sur la biellette 60. La ventouse 127 est ensuite installée sur l'embout 126.

La portion 72 de la biellette 70 est ensuite engagée dans l'alésage 123 du préhenseur 120 de manière à ce que le perçage 128 du préhenseur 120 soit en communication fluidique avec la gorge 62.1 de la biellette 60. Les joints 62.20 et 62.30 assurent l'étanchéité de la liaison fluidique du perçage 128 avec la gorge 62.1. Un écrou 129.2 est engagé et serré sur l'embout fileté 70.3 pour maintenir le préhenseur 120 sur la biellette 70.

La portion 133 du préhenseur 130 est ensuite engagée dans l'alésage 71 de la biellette 70 de manière à ce que le perçage 138 du préhenseur 130 soit en communication fluidique avec la gorge 71.1 de la biellette 70. Les joints 134.20 et 134.30 assurent l'étanchéité de la liaison fluidique du perçage 138 avec la gorge 71.1. Un écrou 139.1 est engagé et serré sur la portion filetée 132 pour maintenir le préhenseur 130 sur la biellette 70. La ventouse 127 est ensuite installée sur l'embout 126.

Le téton 106 est alors engagé dans l'alésage 135 du préhenseur 130. La portion 107 vient en appui sur la face 134.4 et la portion médiane 108 s'étend dans l'alésage 135 de manière à ce que le canal 108.1 soit dans le prolongement du perçage 138. Un écrou 139.2 est engagé et serré sur la portion 109. Les joints 108.20 et 108.30 assurent l'étanchéité de la liaison du canal 108.1 au perçage 138.

Le serrage de l'écrou 129.1 et les ajustements des alésages 61 et 123 autorisent une première rotation du préhenseur 110 relativement au préhenseur 120 autour d'un premier axe de rotation O110 confondu avec la direction D120 ainsi qu'une deuxième rotation du préhenseur 130 relativement au préhenseur 120 autour d'un deuxième axe de rotation 0120 confondu avec la direction D120. Le premier axe de rotation O110 et le deuxième axe de rotation 0120 sont confondus et le premier axe de rotation O110 est sensiblement orthogonal à la direction D1 et le deuxième axe de rotation 0120 est sensiblement orthogonal à la direction D2.

Le serrage des écrous 119.2 et 129.2 ainsi que les ajustements des alésages 115 et 123 autorisent une troisième rotation du préhenseur 110 relativement au préhenseur 20 autour d'un troisième axe de rotation O110' confondu avec la direction D1 ainsi qu'une quatrième rotation du préhenseur 130 relativement au préhenseur 20 autour d'un quatrième axe de rotation O120' confondu avec la direction D2. Le troisième axe de rotation O110' est sensiblement parallèle à la direction D1 et le quatrième axe de rotation O120' est sensiblement parallèle à la direction D2. Le troisième axe de rotation O110' est orthogonal au premier axe de rotation O110 et au deuxième axe de rotation 0120.

La bague 102, le téton 106 ainsi que les perçages et canaux 108.1, 118, 128, 138, 63 et 73 et leurs liaisons avec les gorges 61.1, 62.1, 71.1, 72.1 réalisent un circuit pneumatique 8 d'alimentation des préhenseurs 110, 120 et 130 en vide relié par le canal 4 au générateur 5.

Le fonctionnement de l'unité 1 selon ce deuxième mode de réalisation est similaire au fonctionnement de l'unité de préhension selon le premier mode de réalisation. Ce deuxième mode de réalisation permet, en sus des avantages liés au premier mode de réalisation, la préhension de pièces de forme tridimensionnelle complexe.

Selon ce deuxième mode de réalisation, l'unité de préhension 1 comprend un nombre Np de préhenseurs 110, 120, 130 égal à trois et un nombre Nb de biellettes deux préhenseurs 60, 70 égal à : Np-1= 2.

Selon un troisième mode de réalisation représenté en figure 21, l'unité 1 comprend une demi-biellette terminale 80 solidaire du préhenseur 30. Les préhenseurs 10, 20 et 30 présentent respectivement un alésage 210, 220 et 230 qui traverse diamétralement les corps 11, 21 et 31. Les biellettes 40 et 50 présentent respectivement un alésage longitudinal traversant 240 et 250. La demi-biellette 80 présente un alésage longitudinal traversant 280. Les alésages 210, 220, 230, 240, 250 et 280 sont alignés et sont parcourus par un câble 260. Un sertissage 261 disposé sur une extrémité distale 262 du câble 260 vient en appui sur une face distale 81 de la demi-biellette 80. L'extrémité proximale 263 du câble 260 est reliée à un treuil 270. Les biellettes 40 et 50 ainsi que la demi-biellette 80 présentent, ici, une extrémité en forme de chape à deux oreilles.

Le fonctionnement de l'unité 1 selon ce troisième mode de réalisation est similaire au fonctionnement de l'unité de préhension selon les premier et le deuxième modes de réalisation. Ce troisième mode de réalisation permet, en sus des avantages liés aux premier et deuxième modes de réalisation, de réaliser un blocage en position de la première biellette 40 relativement à la deuxième biellette 50 en actionnant le treuil 270. En effet, lorsque le treuil 270 exerce un effort de traction sur le câble 260, le câble 260 exerce un effort d'appui de la biellette 40 sur la biellette 50 via la demi-biellette 80, ce qui bloque la position de la biellette 40 relativement à la biellette 50.

Il est ainsi possible de choisir des ajustements des biellettes 40 et 50 sur les préhenseurs 10, 20 et 30 qui permettent des mouvements relatifs libres des préhenseurs 10, 20 et 30 entre eux et , une fois que ceux-ci ont adopté une position qui semble convenable, bloquer cette position en agissant sur le treuil 270.

Selon ce troisième mode de réalisation, l'unité de préhension 1 comprend un nombre Np de préhenseurs 10, 20, 30 égal à trois et un nombre Nb de biellettes de liaison entre deux préhenseurs 40, 50 égal à : Np-1= 2.

Bien entendu, l'invention n'est pas limitée aux modes de réalisation décrits mais englobe toute variante entrant dans le champ de l'invention telle que définie par les revendications. En particulier,
- bien qu'ici les biellettes soient toutes identiques , l'invention s'applique également à des biellettes différentes comme par exemple des biellettes de longueurs différents ou dont une portion intègre la bague d'alimentation ou la bague terminale ou le téton terminal;
- bien qu'ici les biellette comprennent des canaux internes qui réalisent avec les gorges des préhenseurs un circuit pneumatique d'alimentation en vide, l'invention s'applique également à une unité de préhension dans laquelle le circuit pneumatique est déporté des biellettes ;
- bien qu'ici le positionnement relatif des préhenseurs soit réalisé manuellement par un opérateur, l'invention s'applique également à une unité de préhension dans laquelle les biellettes sont agencées de manière à ce que les préhenseurs soient librement mobiles entre eux et que leurs positions relatives soient figées lors de la mise sous vide du circuit pneumatique ;
- bien qu'ici les préhenseurs soient du type à ventouse par vide, l'invention s'applique également à d'autres types de préhenseurs comme par exemple des préhenseurs à pince ou de type électromagnétique ;
- bien qu'ici les biellettes soient traversées par un câble, l'invention s'applique également à d'autres types d'élément de transmission d'un effort de traction comme par exemple une chaîne ou une courroie ou un élément précontraint de type élastique, l'élément de transmission d'un effort de traction pouvant également être disposé dans un chemin solidaire des biellettes et situé à l'extérieur de celles-ci ;
- bien qu'ici les moyens de blocage de la position relative des biellettes comprennent des écrous ou un câble, l'invention s'applique également à d'autres types de moyens de blocage en position de la première biellette relativement à la deuxième biellette comme par exemple un électroaimant, un ensemble roue/cliquet commandable, des roues dentées freinées ;
- bien qu'ici l'unité de préhension comprenne un nombre Np de préhenseurs montés en série égal à trois, l'invention s'applique également à une unité de préhension comprenant un nombre Np de préhenseurs reliés en série par des biellettes différents de trois comme par exemple un nombre Np de préhenseurs strictement supérieur à deux ou strictement supérieur à trois ainsi que d'autres configurations de préhenseur comme par exemple une configuration en étoile dans laquelle le deuxième préhenseur serait au centre de l'étoile.

## Revendications

1. Unité de préhension (1) comprenant :
- Np préhenseurs (10, 20, 30, 110, 120, 130), avec Np un nombre entier supérieur à deux,
- Np-1 biellettes (40, 50, 60, 70), chaque biellette (40, 50, 60, 70) comprenant un premier point de terminaison (41, 51) agencé pour accueillir un préhenseur proximal (10, 20) appartenant aux Np préhenseurs (10, 20, 30) et un deuxième point de terminaison (42, 52) agencé pour accueillir un préhenseur distal (20, 30) appartenant aux Np préhenseurs (10, 20, 30), dans lequel chaque biellette (40, 50, 60 ???) est agencée pour autoriser une première rotation du préhenseur distal relativement au préhenseur proximal autour d'un premier axe de rotation passant par le premier point de terminaison.

2. Unité de préhension (1) selon la revendication 1, dans laquelle, une des biellettes (40, 50, 60, 70) s'étend selon une direction principale (D1), le premier axe de rotation (O10, O110) est sensiblement orthogonal à la direction principale (D1).

3. Unité de préhension (1) selon la revendication 1, dans laquelle, une des biellettes (40, 50, 60, 70) s'étendant selon une direction principale (D1), le premier axe de rotation (O10, O110) est sensiblement parallèle à la direction principale (D1) .

4. Unité de préhension (1) selon l'une quelconque des revendications précédentes, dans laquelle au moins une biellette (50, 70) est également agencée pour autoriser une deuxième rotation du préhenseur distal (30, 130) relativement au préhenseur proximal (20, 120) autour d'un deuxième axe de rotation (O110') distinct du premier axe de rotation (0120).

5. Unité de préhension (1) selon la revendication 4, dans laquelle le deuxième axe de rotation (O110') est orthogonal au premier axe de rotation (0120).

6. Unité de préhension (1) selon l'une quelconque des revendications précédentes, dans laquelle au moins un préhenseur (10, 110, 20, 120, 30, 130) comprend une ventouse (17, 27, 37, 117, 127, 137) de préhension par le vide.

7. Unité de préhension (1) selon la revendication 6, dans laquelle au moins une biellette (40, 60, 50, 70) comprend un canal de liaison fluidique (43, 53, 63, 73) destiné à être raccordé à un générateur de vide (5) .

8. Unité de préhension(1) selon l'une quelconque des revendications précédentes, comprenant des moyens de blocage (18, 28, 38, 119.1, 119.2, 129.1, 129.2,139.1, 139.2, 260) en position d'une biellette (40, 60) de la première pluralité de biellettes relativement à une autre biellette (50, 70) de la première pluralité de biellettes.

9. Unité de préhension (1) selon la revendication 8, dans laquelle les moyens de blocage (18, 28, 38, 119.1, 119.2, 129.1, 129.2,139.1, 139.2, 260) comprennent un élément de transmission d'un effort de traction (260) qui coopère avec les biellettes (40, 60, 50, 70) pour appliquer un effort d'appui d'une biellette (40, 60) sur une autre biellette (50, 70) lors de l'application d'un effort de traction sur au moins une extrémité (263) de l'élément de transmission d'un effort de traction (260).

10. Unité de préhension (1) selon l'une quelconque des revendications précédentes, dans laquelle au moins un préhenseur (10, 110, 20, 120, 30, 130) comprend un corps ( 11, 21, 31, 111, 121, 131) s'étendant selon une direction longitudinale (D10, D20, D30, D110, D120, D130) et une biellette (40, 60, 20, 120) comprend un alésage (41, 42, 51, 52, 61, 71) d'accueil d'une portion cylindrique droite (13, 23, 33, 113, 124, 133) dudit préhenseur (10, 20, 30, 110, 120, 130), ladite portion (13, 23, 33, 113, 124, 133) étant délimitée par un méplat destiné à recevoir un effort de serrage de ladite biellette (40, 50, 60, 70) selon la direction longitudinale (D10, D20, D30, D110, D120, D130).

11. Unité de préhension (1) selon la revendication 10, dans laquelle au moins un préhenseur (10, 20, 30, 110, 120, 130) comprend une portion filetée (14, 24, 34, 112, 125, 132) d'accueil d'un écrou de serrage (18, 28, 38, 119.1, 119.2, 129.1, 129.2,139.1, 139.2).

12. Unité de préhension (1) selon l'une quelconque des revendications précédentes, dans laquelle Np est strictement supérieur à trois.
